# EUROPEAN PATENT APPLICATION

(11) **EP 4 005 369 A1**
(43) Date of publication of application: **01.06.2022**
(21) Application number: 21210666.0
(22) Date of filing: 26.11.2021
(51) Int. Cl.: A01G 13/02, A01N 63/00, A01N 65/00, A01N 63/50

(54) **A METHOD TO CONTROL THE INVASIVE EXOTIC PLANT FALLOPIA JAPONICA PRESENT IN A PIECE OF LAND**

(30) Priority: 27.11.2020 NL 2026996
(71) Applicant: Loonbedrijf Seelen Beheer B.V., 5993 NH Maasbree (NL)
(72) Inventor: SEELEN, Wilhelmus Johannes Peter, 5993 NH Maasbree (NL)
(74) Representative: Janssen, Paulus J. P.

(57) **Abstract**

The present invention pertains to a method of controlling the invasive exotic plant *Fallopia japonica* (Japanese knotweed) that is present in a piece of land, the method comprising introducing in a top soil layer of the piece of land a proteinaceous organic material in an amount such that at least 0.1 gram protein per litre of soil is introduced, covering the piece of land with an air tight barrier to restrict the diffusion of oxygen from the atmosphere into the soil and maintaining the air tight barrier until the invasive exotic plant in essence has lost its ability to propagate.

## Description

### GENERAL FIELD OF THE INVENTION

The present invention concerns a method of controlling the invasive exotic plant *Fallopia japonica* (Japanese knotweed), which plant is present in a piece of land. Over the past two decades invasive exotic (i.e. non-native plants have come to be recognized as one of the most serious ongoing causes of native species declines and native habitat degradation. In particular for managers of parks, reserves, and other public land exotic plant species are an ongoing threat to the persistence of native assemblages because they can consume native species, infect them with diseases to which they have no resistance, outcompete them, or alter ecosystem functions, making it difficult and expensive to return the ecosystem to its prior, often more desirable, condition. A major goal of practitioners is to return a habitat to a more desirable condition involving a particular species composition, community structure, and/or set of ecosystem functions based on native species.

### BACKGROUND OF THE INVENTION

The control of invasive exotic plants, which behave like pests, is an increasingly important part of managers of (public) lands. Selectively removing exotic species usually serves as a release treatment for native species by reducing competition for light, water, and nutrients. Response by native plants can be rapid and may eliminate the need for replanting. As native species recover and a site stabilizes, the site becomes less susceptible to future invasions. In the early stages of exotic plant invasions, low-impact removal methods are usually the best way to reestablish dominance by native communities.

Herbicide treatments that are properly applied can selectively remove individual plants while causing minimal soil disturbance. Even disturbance of the litter layer can create conditions favorable to reinvasion. Therefore, the benefits of using heavy equipment such as tractors are often outweighed by the potential for soil disturbance and erosion. Physical removal by hand or hand tools causes less disturbance than mechanical methods but is very labor intensive. When choosing herbicides, resource managers must understand and carefully consider herbicide labeling, precautions, application method, and site. Not all herbicides are appropriate for all areas. Herbicides preferred for selective use in natural areas are generally products with negligible soil activity that are not taken up by the root systems of untreated plants. Herbicides that normally break down with little soil movement may degrade more slowly in saturated (anaerobic) soils or move downward in inorganic sands. A monitoring program, carefully designed and implemented, is necessary to assess the effectiveness of management efforts, especially where complete removal of invasive species is the goal.

The downside of using herbicides is obvious, herbicides are introduced in the environment and thus the eco system. In particular for controlling invasive exotic plants it may be that relatively large amounts of herbicides are necessary due to the lack of natural enemies of the plant, such as native fungi, bacteria, insects etc. Where native species can sometimes be controlled easily since they already are in constant competition with other native species and organisms, this is most of the times not so with invasive exotic species, hence their behavior as pests.

The problem of invasive exotic plants is present around the world. In Europe there are some exponents of this, in particular plants like *Fallopia japonica* (Japanese knotweed), *Heracleum mantegazzianum* (Giant hogweed), *Impatiens glandulifera* (Ornamental jewelweed) and *Cuperus esculentus* (Yellow nutsedge). These plants are particularly difficult to eradicate with any common method, basically since they have a system of rhizomes, a large underground network of roots. To eradicate the plant the roots need to be killed. All above-ground portions of the plant need to be controlled repeatedly for several years in order to weaken and kill the entire patch. Picking the right herbicide is essential, as it must travel through the plant and into the complete root system below.

An alternative method is to simply excavate the soil with the plants and replace it with new clean soil. The excavated soil can then be treated under controlled conditions without the risk of polluting the environment, or left for many years (10-15+ years) until the plant has died due to lack of nutrients. This ex situ method can be done in an eco-friendly manner, but is very expensive to perform.

### OBJECT OF THE INVENTION

It is an object of the present invention to devise an alternative method to control the invasive exotic plant *Fallopia japonica,* which method is environmental friendly and can be adequately applied in situ, i.e. at the location where the plant has invaded the land.

### SUMMARY OF THE INVENTION

In order to meet the object of the invention, a new method of controlling the invasive exotic plant *Fallopia japonica* is devised, the method comprising introducing in a top soil layer of the piece of land comprising the invasive exotic plant, a proteinaceous organic material in an amount such that at least 0.1 gram protein per litre of soil is introduced, covering the piece of land with an air tight barrier to restrict the diffusion of oxygen from the surroundings into the soil and maintaining the air tight barrier on the piece of land for 1-52 weeks until the invasive exotic plant, in essence, has lost its ability to propagate. This means that the plant may still live, but is unable, at least for a period of at least 3-6 months (thus for example 3, 4, 5, 6, 7, 8, 9, 10, 11, 12, 13, 14, 15, 16, 17, 18, 19, 20, 21, 22, 23, 24 months), to propagate and thus multiply. Preferably, the plant has lost its ability to propagate for ever (which in practice means for at least 24 months). In the latter case, removal of the plant (if desired) can be done at any time after the treatment, In the former case, the plant has to be removed before it regains its ability to propagate. Most preferably the plant, and if applicable its seeds, have died during the treatment.

Surprisingly, the invasive exotic plant *Fallopia japonica* was found to lose its ability to propagate within a relatively short timeframe of weeks, when the land is covered to create an anaerobic condition, while at the same time extraneous protein is introduced in the soil. Although it is known for native plants that they lose their ability to propagate within weeks when the land is covered with plastic for example (cf. a shelter tent on grass), for invasive exotic plants which have no natural enemies (fungi, bacteria, insects etc), it has always been understood that this takes 4-5 years of coverage until loss of ability to propagate. For example, it is described that *Cuperus esculentus* (Yellow nutsedge) is treated as now found, this during a time frame well below 4-5 years, at best this leads to only a partial loss of the ability to propagate. In practice therefore, this method has not found to be successful to eradicate any invasive exotic plant. Surprisingly, to control *Fallopia japonica,* it appears that the introduction of additional protein, next to the inherent presence of carbohydrates and lipids in the organic material, has the extra effect of creating a condition in the covered soil that rapidly induces the loss of the ability to propagate for this invasive exotic plant.

The method wherein additional protein is introduced in the soil is in the art applied for so called biological soil disinfestation (BSD). This is an environmentally friendly method which is used in the art to disinfest the soil from soilborne fungi and nematodes. With biological soil disinfestation typically a green manure crop (40 tonnes per ha), or other green biomass is homogeneously incorporated into the soil layer that has to be disinfested. Then the field is typically lightly compacted and irrigated. Subsequently, the soil is covered with a plastic film to restrict oxygen supply. The soil is left covered for six to ten weeks. After covering the soil, anaerobic conditions develop which last for several weeks. Preferably the temperature of the soil is above 16°. Under these conditions high amounts of toxic fermentation products are formed which effectively and rather quickly kill the fungi and nematodes. Also, it is known to increase the introduction of extraneous protein since this leads to an increased formation of methane gas, which is very effective for killing the fungi and nematodes. Levels above 0.5 gram per litre of soil have been used in practice, such as for example 4-10 grams. However, the method has not been used so far for controlling invasive exotic plants, most probably since it was believed that it would take years in order to induce a loss of propagation ability of a plant. Also, one may not have realised that the toxic fermentation products will diffuse deeper into the land than the actual layer in which the proteinaceous organic material was introduced, typically at a regular ploughing depth of 35-40 cm. Indeed, many invasive exotic plants have (some) roots that go way deeper, even up to 1.5 m or below. By keeping the piece of land covered, the toxic fermentation product apparently diffuse into the ground to deeper levels and effectively treat the roots of the plants such that the latter ultimately loses its ability to propagate, or is even completely killed, including potential seeds present in the soil.

### DEFINITIONS

An *invasive exotic* plant is a non-native species that spreads from a point of introduction to become naturalized and negatively alters its new environment. An invasive species adversely affect the invaded habitat and bioregion, causing ecological, environmental, and/or economic damage.

A *rhizomatous* plant is a plant with rhizomes, modified subterranean plant stem system that sends out roots and shoots from its nodes. Rhizomes are also called creeping rootstalks or just rootstalks. Rhizomes develop from axillary buds and grow horizontally. The rhizome also retains the ability to allow new shoots to grow upwards, thus being part of the vegetative propagation of the plant.

A *proteinaceous* material is a material that contains protein(s).

An *organic* material is a material relating to or derived from living matter, thus at least comprising carbohydrates and often also lipids, water and proteins.

A layer that is *substantially impervious for oxygen* means that the transport of oxygen through the layer by diffusion is reduced at least 99% (in volume per hour per surface unit) when compared to a situation in which the layer is absent.

*In essence* means fundamentally and without regard for peripheral details, i.e, details not affecting the basics.

An *ability of a plant to propagate* means to be able and multiply as if no physical, chemical or other restrictions were present.

*Vegatative propagation* is any form of asexual reproduction occurring in plants in which a new plant grows from a fragment of the parent plant or a specialized reproductive structure of such plant.

An *airtight* barrier is a barrier that restricts the free travel of air, preferably by reducing the free travel with respect to the unrestricted situation (i.e. no air tight barrier present) by at least 50%, preferably by at least 60, 70, 80, 90, 91, 92, 93, 94, 95, 96, 97, 98, 99 or even 100%.

### EMBODIMENTS OF THE INVENTION

In a first embodiment of the method according to the invention the air tight barrier is maintained until the plant has lost its ability to vegetatively propagate. As indicated here above, many invasive plants are rhizomatous. The thuggish nature of much of the vegetation one finds on invasive exotic plants lists, is due to the vigour of the rhizomes of these aggressive plants. One reason why it is so difficult to eradicate an invasive plant that uses rhizomes to multiply is that, from a piece of rhizome left behind in the soil (after you have tried to dig the plant out, for instance), a new plant can emerge. Examples of aggressive weeds and/or invasive plants that spread out of control with the help of rhizomes include next to the ones mentioned here above Creeping Charlie (*Glechoma hederacea*)*,* Horsetails (*Equisetum hyemale*)*,* Poison ivy (*Rhus radicans*) and Stinging nettle (*Urtica*)*.* However when native, control is relatively easy due to the presence of natural enemies. Once they become exotic by introduction in a non-native environment, the invasive nature becomes problematic due to the presence of the rhizomes. With the present method however, the air tight barrier is maintained until the rhizomatous plant has lost its ability to vegetatively propagate, therewith effectively reducing the very effective properties of the rhizomes for vegatative propagation to nil.

In an embodiment the air tight barrier is maintained on the piece of land for at least 5 weeks. It has appeared that for most invasive exotic plants 5 weeks is preferred over 4 weeks in order to induce a loss of propagation ability. Preferably the air tight barrier is maintained on the piece of land for 6-10 weeks, more preferably for 6-8 weeks.

In yet another embodiment, with the proteinaceous organic material at least 0.5 gram protein per litre of soil is introduced, such as 1, or 1.5 grams. Preferably 2 - 50 gram protein per litre of soil is used (such as 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39 40, 41, 42, 43, 44, 45, 46, 47, 48, 49 or 50 grams per litre of soil), most preferably 4 - 40 gram protein per litre of soil. The source of the protein is not critical. It may be pure protein such as gluten, animal protein (e.g. chicken meat, bone meal or insect meal) or protein rich plants such as young lawn grass. It may thus be that the proteinaceous organic material is living or non-living organic material. For example, useful sources of protein are fresh grass, potato protein, Protamylasse^{®}, bone meal, insect meal (such as for example ProteinX of Protix, Dongen, The Netherlands) and gluten.

In still another embodiment the air tight barrier is substantially impervious for oxygen. This make sure the proper anaerobic conditions arise fast. When the barrier still allows a substantial amount of oxygen to pass, the method may still be effective but is understood to take more time before the plant has lost its ability to propagate.

In again another embodiment the air tight barrier is chosen from the group consisting of plastic foil (commonly applied in BSD; the foil may be non-biologically degradable or biologically degradable), a polymer coating (e.g. sprayed directly on the land), a mineral coating (e.g. clay), a layer of water (also commonly used to create an anaerobic condition in the land underneath due to the slow diffusion of oxygen through water).

In yet again another embodiment the proteinaceous organic material is introduced in a top soil layer that has a thickness of 5-50 cm, such as for example in a top soil layer that has a thickness of 30-45 cm.

In still again another embodiment the proteinaceous organic material contains at least 10 weight percent protein, such as for example between 15 and 80 weight percent protein, such as 15, 20, 25, 30, 35, 40, 45, 50, 55, 60, 65, 70, 75 or 80 percent.

### EXAMPLE

The present method has been reduced to practice in an experiment using one the most thuggish and harsh, and therewith most difficult to control, invasive exotic plants, namely Japanese knotweed (*Fallopia japonica*)*.*

For the experiment an amount of 300 m³ soil which was heavily overgrown with Japanese knotweed, was spread over an area of about 900 m². The major part of the experimental piece of land was treated by incorporating in the soil, in a layer of about 40 cm deep, an amount of fresh grass, high in protein, at 40 tonnes per hectare, which corresponds to about 2 gram of protein per litre of soil. The soil was slightly irrigated, compacted and covered with foil as described in EP 2601829. The plastic air tight barrier was kept as a coverage for 6 consecutive weeks during August-September, at an average environmental temperature of about 18-20°C. The smaller part of the piece of land was left untreated and was used as a positive control.

After this, samples of the soil (including rhizomes) and the plants themselves were taken from each of the pieces of land (treated and untreated) and brought over to a greenhouse. For this 40 containers (20x20x20cm) were filled with clean turf. Twenty of these containers were provided with samples from the treated piece of land, and 20 containers were provided with samples from the untreated land. For this, in each case, 12 containers were sampled with soil containing rhizomes, 7 with soil containing root hairs of the plants, and 1 container with 20 cuttings of the plants themselves. After that, the containers were topped up with clean turf and left in the greenhouse at conditions favouring growth of the knotweed (15-25°C and 80% humidity). The containers were inspected at weekly intervals up to 7 weeks after starting the growth phase. The results after 7 weeks of inspection were as follows:
- None of the 12 containers with rhizomes from the treated land showed any sign of knotweed growth, whereas 9 out of 12 containers of the untreated land did.
- None of the 7 containers with root hairs from the treated land showed any sign of knotweed growth, whereas 6 out of 7 of the untreated land did.
- None of the 20 cuttings from the treated land showed any sign of growth, whereas 19 out of 20 of the cuttings from the untreated land did.

This clearly shows that by using the present method, the invasive exotic plant completely lost its ability to (vegetatively) propagate. Given the fact that the rhizomes, root hairs and cuttings showed clear signs of the presence of fungi, it may even be concluded that the plants had died during the treatment. Given the fact that this very effective control was obtained by covering the land for six weeks, it is plausible that an effect on the propagation ability alone may be obtained in less time, such as 4 or 5 weeks, or even less (such as 1, 2 or 3 weeks) at higher environmental temperatures (reaction speeds typically double at each 10°C elevation). For other invasive exotic plants that are less harsh to control this may even take less time, although 4 weeks appears to be a practical minimum to be able and guarantee a good overall result controlling multiple invasive exotic plants in one go at normal summer temperatures using non-heat-absorbing air barrier (black plastic leads to substantially higher temperatures and thus shorter treatment times). It is estimated that the longest time needed will never exceed 52 weeks weeks, although it is more likely to be even substantially less given the above data, such as for example, 50, 45, 40, 35, 30, 29, 28, 27, 26, 25, 24, 23, 22, 21, 20, 19, 18, 17, 16, 15, 14, 13, 12, 11, 10, 9, 8, 7 or 6 weeks.

## Claims

1. A method of controlling the invasive exotic plant *Fallopia japonica,* which plant is present in a piece of land, the method comprising:
- introducing in a top soil layer of the piece of land comprising the invasive exotic plant, a proteinaceous organic material in an amount such that at least 0.1 gram protein per litre of soil is introduced;
- covering the piece of land with an air tight barrier to restrict the diffusion of oxygen from the surroundings into the soil;
- maintaining the air tight barrier on the piece of land for 1-52 weeks until the invasive exotic plant in essence has lost its ability to propagate.

2. A method according to claim 1, **characterised in that** the air tight barrier is maintained until the plant has lost its ability to vegetatively propagate.

3. A method according to any of the preceding claims, **characterised in that** the air tight barrier is maintained on the piece of land for at least 5 weeks.

4. A method according to claim 3, **characterised in that** the air tight barrier is maintained on the piece of land for 6-10 weeks, preferably for 6-8 weeks.

5. A method according to any of the preceding claims, **characterised in that** with the proteinaceous organic material at least 0.5 gram protein per litre of soil is introduced.

6. A method according to claim 5, **characterised in that** that with the proteinaceous organic material 2 - 50 gram protein per litre of soil is introduced, preferably 4 - 40 gram protein per litre of soil.

7. A method according to any of the preceding claims, **characterised in that** the proteinaceous organic material is living or non-living organic material.

8. A method according to claim 7, **characterised in that** the proteinaceous organic material is chosen from fresh grass, potato protein, Protamylasse^{®}, bone meal, insect meal and gluten.

9. A method according to any of the preceding claims, **characterised in that** the air tight barrier is substantially impervious for oxygen.

10. A method according to any of the preceding claims, **characterised in that** the air tight barrier is chosen from the group consisting of plastic foil, a polymer coating, a mineral coating, a layer of water.

11. A method according to any of the preceding claims, **characterised in that** the proteinaceous organic material is introduced in a top soil layer that has a thickness of 5-50 cm.

12. A method according to claim 11, **characterised in that** the proteinaceous organic material is introduced in a top soil layer that has a thickness of 30-45 cm.

13. A method according to any of the preceding claims, **characterised in that** the proteinaceous organic material contains at least 10 weight percent protein.

14. A method according to claim 13, **characterised in that** the proteinaceous organic material contains between 15 and 80 weight percent protein.
